# EUROPEAN PATENT APPLICATION

(11) **EP 4 819 535 A1**
(43) Date of publication of application: **07.10.2026**
(21) Application number: 24895398.6
(22) Date of filing: 08.05.2024
(51) Int. Cl.: H04L 9/32, H04L 9/08

(54) **PACKED SECRET SHARING-BASED GENERAL NON-INTERACTIVE ZERO-KNOWLEDGE PROOF METHOD AND SYSTEM**

(30) Priority: 30.11.2023 CN 202311625074
(71) Applicant: Institute Of Software, Chinese Academy of Sciences, Beijing 100190 (CN)
(72) Inventor: ZHANG, Zhenfeng, Beijing 100190 (CN); BAI, Weihao, Beijing 100190 (CN); GAO, Qianwen, Beijing 100190 (CN); CHEN, Long, Beijing 100190 (CN); HAN, Jiang, Beijing 100190 (CN)
(74) Representative: Murgitroyd & Company
(86) International application number: PCT/CN2024/091592
(87) International publication number: WO 2025/112287

(57) **Abstract**

The present invention relates to the field of security protocols. Disclosed are a packed secret sharing-based general non-interactive zero-knowledge proof method and system. The method comprises: at a pre-computation stage, a prover and a verifier run a pre-processing algorithm to generate a verifiable random linear transformation pair required in a proof stage; in the proof stage, the prover runs a proof algorithm, computes a proof π, and sends the proof π to the verifier; and in a verification stage, the verifier runs a verification algorithm on the basis of the proof π and a corresponding common input, and verifies the correctness of execution of an arithmetic circuit C(w, x). According to the present invention, only an underlying MPC protocol needs to be run once, and the protocol can resist quantum computer attacks and does not depend on any algebraic structure. In addition, the protocol design scheme of the present invention is efficient and achievable, the proof time of the key knowledge proof of a lattice-based key encapsulation mechanism Kyber512 is only 1.08 seconds, the preprocessing time is 1.3 seconds, and the verification time is 1.16 seconds.

## Description

### Technical field

The present invention belongs to the field of security protocols, and particularly relates to a general non-interactive zero-knowledge proof method and system based on multi-party computation and packed secret sharing.

### Background arts

Zero-knowledge proofs and non-interactive variants thereof are among the most fundamental and most universal theoretical and practical proof techniques in cryptography. A NonInteractive Zero-Knowledge Argument of Knowledge (NIZKAoK) is a protocol that enables a computationally bounded prover to convince a verifier that the prover knows a witness for a certain statement, without further revealing any information about the witness. Zero-knowledge proof protocols have become an important component of real-world cryptographic applications. For example, a certificate authority (CA) may require an applicant to provide a NIZKAoK as proof of knowledge of a key, so as to prevent rogue-key attacks.

It has been widely studied how to construct NIZK from standard assumptions such as factorization and groups with bilinear maps. With the continuous emergence of new technologies such as big data, cloud computing, the Internet of Things, artificial intelligence, and blockchain, as well as the development of quantum computing, non-interactive zero-knowledge proof protocols for specific problems under the classical model are difficult, in terms of their functions and practical application effects, to satisfy the requirements of various practical application scenarios. Therefore, in order to realize a general non-interactive zero-knowledge proof protocol for arbitrary problems, which can resist attacks from quantum computing and simultaneously avoid the limitations brought by multiple rounds of interaction in practical applications, research on post-quantum general non-interactive zero-knowledge proof protocols has become an important development direction since the birth of zero-knowledge proofs.

Recent research has also shown that NIZK for proving arbitrary NP (Nondeterministic Polynomially) languages can also be constructed based on lattice assumptions. Such protocols are particularly desirable because lattice-based assumptions are considered hard in the quantum computer model. Although work in this direction has excitingly achieved new feasibility results based on lattice assumptions, our understanding of how to optimize the efficiency of such constructions is still at an early stage.

An efficient and implementable way to construct a post-quantum general non-interactive zero-knowledge proof system is to use the "MPC-in-the-head" (MPCitH) paradigm. Existing zero-knowledge proofs constructed based on the MPCitH paradigm are based on MPC (MultiParty Computation) protocols secure in the semi-honest model. When constructing NIZKs from an n-party MPC with semi-honest security, since violating robustness requires a cheating prover to generate at least one pair of inconsistent views, the probability of detecting cheating behavior by randomly revealing the views of two participants may be 1/n. In order to make the probability of soundness error negligible, the NIZK prover needs to repeatedly run the MPC protocol corresponding to the statement to be proved for O(λ) times, where λ is a security parameter. Recently, a series of elegant works have shown great potential for constructing efficient NIZKs from semi-honest secure MPC protocols in various applications, but still cannot solve the problem of an excessive number of rewinding rounds. Therefore, although this method is highly efficient, it has the problem of a relatively large proof size.

Therefore, how to construct an efficient general non-interactive zero-knowledge proof system based on multi-party computation, which does not require rewinding the circuit corresponding to the problem to be proved, can resist attacks from quantum computers, and does not depend on any algebraic structure, is still an open problem.

### Summary of the invention

In view of the problems existing in the prior art, an object of the present invention is to provide a general non-interactive zero-knowledge proof method and system based on multiparty computation and packed secret sharing. The present invention provides an efficient, sizeoptimized, general non-interactive zero-knowledge proof method which only needs to execute the circuit corresponding to the problem to be proved once, can resist attacks from quantum computers, and does not depend on any algebraic structure. Meanwhile, the present invention further provides a key zero-knowledge proof technique for the post-quantum standard algorithm Kyber.

The general non-interactive zero-knowledge proof method based on multi-party computation and packed secret sharing according to the present invention comprises a precomputation phase, a proof phase, and a verification phase.

In the precomputation phase, a prover and a verifier run a preprocessing algorithm to generate verifiable random linear transformation pairs required in the proof phase.

In the proof phase, the prover runs a proving algorithm, performs packed secret sharing on a witness w, runs an arithmetic circuit C(x, w) according to packed secret-sharing values, a statement x, and the random linear transformation pairs generated in the precomputation phase, computes a proof π, and sends the proof π to the verifier.

In the verification phase, the verifier runs a verification algorithm according to the proof π and a corresponding public input, and verifies the correctness of execution of the arithmetic circuit C(x, w).

Further, the general non-interactive zero-knowledge proof method of the present invention provides a new proving framework. The proving framework is mainly divided into three parts: a precomputation phase, a proof phase, and a verification phase. For an arbitrary NP language class R(x, w) = 1, where R(x, w) is a publicly known description corresponding to an NP problem having statement x and witness w, suppose that the corresponding arithmetic circuit is denoted by C(x, w) =1. In arithmetic circuit C, the number of linear transformation gates involving a linear transformation T is v, where T is a matrix corresponding to the linear transformation, and v is a natural number.

First, the prover and the verifier interactively run the first phase, namely the precomputation phase, to generate the verifiable random linear transformation pairs required in the second phase, namely the proof phase, that is, the remaining unopened v linear transformation pairs among the N verifiable linear transformation pairs described in step (2) below.

The second phase, namely the proof phase, is run by the prover. According to the witness w, the prover performs packed secret sharing on the witness w. The packed secret-sharing algorithm has the same idea as the Shamir secret-sharing algorithm, except that one secretsharing polynomial contains a plurality of secrets. Then, according to the packed secret-sharing values of the witness w, the statement x, and the verifiable random linear transformation pairs generated in the precomputation phase, the prover runs the circuit C(x, w) as shown in step (3), wherein the circuit comprises addition gates, multiplication gates, and linear transformation gates, and computes a challenge value according to commitment values of the generated views of secret-sharing values. Finally, the prover outputs a proof according to the challenge value, wherein the proof is view information of some participants in the arithmetic circuit C(x, w) computed by the prover, and comprises views of multiplication gates, views of linear transformation gates, and the verifiable random linear transformation pairs generated in the precomputation phase. The proof is finally sent to the verifier.

The third phase, namely the verification phase, is run by the verifier. According to the proof π and the corresponding public input, the verifier runs a verification algorithm. According to the views of multiplication gates and the views of linear transformation gates contained in the proof, the verifier verifies the correctness of execution of the circuit. Meanwhile, according to the commitment values of partially opened users, the verifier recomputes the output of the circuit and verifies whether the output satisfies C(x, w) = 1.

Further, the present invention does not depend on any algebraic structure, and may be constructed based on any group, ring, and corresponding algebraic assumptions thereof. In the meantime, the present invention includes any zero-knowledge proof protocol constructed by using packed secret sharing and the MPCitH paradigm.

Further, the general non-interactive zero-knowledge proof method of the present invention provides a precomputation phase for zero-knowledge proof. Assume that a linear transformation required in the proving process is represented by a matrix T . The precomputation phase comprises the following steps:
The prover first randomly selects k+v+1 random vectors fⱼ of length l, where j∈{0, 1, . . . , k+v}. Then, for each vector fⱼ , the prover generates a packed secret sharing of degree d, denoted by [fⱼ], wherein the i-th packed secret-sharing value is denoted by [fⱼ](i). Further, the prover computes Tfⱼ, and then, for each Tfⱼ, generates a packed secret sharing of degree d, denoted by [Tfⱼ]. Thereafter, the prover computes commitment values of the packed secret sharing: ${Com}_{i} = {H}_{com} \left({\left(\left[{f}_{j}\right], \left[{Tf}_{j}\right]\right)}_{j ∈ \left[0,k+v\right]}\right) ,$ where H_{com} is a hash function. Further, the prover computes k+v random challenge values ${α}_{1} , … , {α}_{k + v} ← {H}_{C} \left({Com}_{1},…,{Com}_{N}\right) ,$ where H_{C} is a hash function, N denotes the output length of the secret sharing, k is a parameter indicating the number of challenge values for ensuring algorithm security, and v is the number of linear transformation gates required in a subsequent proof circuit. For each group of secretsharing values [fⱼ] and [Tfⱼ ], where j∈{0, . . . , k + v}, the prover computes $\left[{r}_{i}\right] = \left[{f}_{0}\right] + \left[{f}_{1}\right] {α}_{i} + \left[f2\right] {{α}_{i}}^{2} + ⋯ + \left[{f}_{k + v}\right] {{α}_{i}}^{k + v}$ and $\left[{Tr}_{i}\right] = \left[{Tf}_{0}\right] + \left[{Tf}_{1}\right] {α}_{i} + \left[{Tf}_{2}\right] {{α}_{i}}^{2} + ⋯ + \left[{Tf}_{k + v}\right] {{α}_{i}}^{k + v} ,$ for all i ∈ {1, ... , k+v}. The prover then sends the linear transformation pairs ([rᵢ], [Trᵢ]), where i ∈ {1, ... , k}, to the verifier. The verifier verifies whether [fⱼ] and [Tfj] satisfy the linear transformation relation T . If verification succeeds, the verifier believes that the prover has honestly generated [fj] and [Tfⱼ]. Thereafter, the prover uses the remaining v groups of unopened linear transformation pairs ([rᵢ], [Trᵢ]), where i ∈ {k+1, . . . , k+v}, as secret-sharing values for executing subsequent linear-gate operations.

Further, in the precomputation phase, the method used in the present invention for generating the verifiable random linear transformation pairs ([rᵢ], [Trᵢ]), where i ∈ {k+1, ... , k+v}, covers any protocol for generating required verifiable random linear transformation pairs by any method. The description of the present invention merely takes the above method for generating corresponding verifiable random linear transformation pairs as an example to illustrate the method of the present invention.

Further, the general non-interactive zero-knowledge proof method of the present invention provides a proving algorithm. The prover runs the proving algorithm according to the witness w and the unopened v linear transformation pairs ([rᵢ], [Trᵢ]), where i∈ {k+1, ... , k+v}, generated in the precomputation phase. The steps comprise the following:
3.1)The prover first performs a packed secret-sharing algorithm of degree d on the witness w, so as to compute packed secret-sharing values ${\left[w\right]}_{d} ← PSS \left(w\right) ,$ where the function PSS denotes a packed secret-sharing function. The function takes, as input, a group of secret values to be shared and having length 1, and outputs N secret-sharing values related to the group of secret values. The algorithm is known in the art. For the packed secretsharing function PSS, assume that the threshold value is t, the number of secrets to be shared is 1, and the degree d satisfies: $d = t + 1 + 1 .$ The packed secret-sharing function first selects a polynomial F(x) of degree d satisfying: $F \left(-i\right) = {w}_{i} , i ∈ \left\{1,…,1\right\} ,$ where wᵢ denotes the i-th element of witness vector w, and then randomly selects t+1 points qi satisfying: $F \left(i\right) = {q}_{i} , i ∈ \left\{0,…,t\right\} .$ According to the interpolation polynomial F(x), the secret-sharing values are computed as: $PSS \left(w\right) = {\left[w\right]}_{d} = \left(F\left(1\right),F\left(2\right),…,F\left(N\right)\right) .$

3.2)The prover computes, according to the packed secret-sharing values [w]_{d} of the witness, an arithmetic circuit C(x, w)=1 corresponding to NP language R(x, w)=1. The arithmetic circuit comprises the following:
3.2.1) Addition gate Add([e], [f]): For any two elements e,f∈F_{q} in the packed secret-sharing circuit on which an addition-gate operation is to be performed, the prover computes the addition gate as $\left[d\right] = \left[e\right] + \left[f\right] ,$ wherein F_{q} is a set of elements selected from 0, 1, . . . , q-1, and q represents the modulus of an underlying computation field F. Finally, the output of the addition gate is [d].

### 3.2.2) Linear transformation gate Multi([gᵢ], T, [rᵢ], [Trᵢ])

For the packed secret-sharing value [gᵢ] requiring linear transformation at the i-th linear transformation gate of the circuit and the corresponding linear transformation matrix T , the prover utilizes the i-th linear transformation pair ([rᵢ], [Trᵢ]) generated in the precomputation phase. First, the prover computes [gᵢ]+[rᵢ]. Then, according to a packed secret-sharing reconstruction algorithm, the prover reconstructs [gᵢ]+[rᵢ], wherein the reconstruction algorithm restores a secret polynomial according to Lagrange interpolation and then obtains secret values. The prover computes T(gᵢ+rᵢ) according to the matrix T and performs secret sharing again to obtain [T(gᵢ+rᵢ)]. According to [T(gᵢ+rᵢ)] and another element [Trᵢ] of the linear transformation pair, the prover calls the addition gate to compute: [T(gᵢ+rᵢ)] - [Trᵢ] = [Tgᵢ]. Finally, the prover outputs the packed secret-sharing value [Tgᵢ] after linear transformation.

### 3.2.3) Multiplication gate Multi([gᵢ], [hᵢ])

For multiplication-gate computation of the circuit, namely, computing [gᵢ∗hᵢ] according to gᵢ and hᵢ , since the secret-sharing values are of degree d, the prover first computes: ${\left[{z}_{i}\right]}_{2 d} = \left[{g}_{i}\right] \times \left[hi\right] .$ At this time, [zi ]_{2d} is a secret-sharing value of degree 2d. The prover then reconstructs to obtain zᵢ . Further, the prover performs the packed secret-sharing algorithm again so as to compute a secret-sharing value [zᵢ]_{d} of degree d corresponding to zᵢ. Then the prover computes: ${\left[{u}_{i}\right]}_{2 d} = {\left[{z}_{i}\right]}_{d} - {\left[{z}_{i}\right]}_{2 d} .$ It can thereby be obtained that the secret-sharing values corresponding to [uᵢ]_{2d} are all 0. Finally, the prover outputs the result [zᵢ]_{d} of the multiplication gate and the corresponding verification value [uᵢ]_{2d}.

3.3)The prover runs an output gate, wherein the output gate comprises N views of secret-sharing values: $V = \left({V}_{1},…,{V}_{N}\right) .$ Each Vᵢ comprises messages generated by running each packed secret-sharing operation gate, namely: ${V}_{i} = \left({\left[w\right]}_{d}\left(i\right),\left[{g}_{i}\right]\left(i\right)+\left[{r}_{i}\right]\left(i\right),{\left[{z}_{i}\right]}_{d},{\left[{u}_{i}\right]}_{2 d},\left[{f}_{j}\right]\left(i\right),\left[{Tf}_{j}\right]\left(i\right)\right) ,$ wherein [w]_{d}(i) denotes the i-th component of the packed secret sharing of w. Then the prover computes the commitment values thereof: ${com}_{1} = {H}_{com} \left({V}_{1}\right) , … , {com}_{N} = {H}_{com} \left({V}_{N}\right) ,$ and sends the same to the verifier.

3.4) According to the received commitment values com₁, com₂, . . . , com_{N} , the verifier randomly selects a challenge set I, where |I| = t, and t denotes the number of commitments to be opened, and then sends the challenge set to the prover.

3.5) According to the received challenge set, the prover opens the corresponding commitment values and sends the same to the verifier. Namely, the prover sends Vᵢ, where i∈I, as the proof π to the verifier.

3.6) Further, according to the general Fiat-Shamir transform, the above general interactive zeroknowledge proof protocol can be converted into a non-interactive zero-knowledge proof protocol. The non-interactive zero-knowledge proof protocol has important significance in scenarios where a large number of cryptographic protocols are executed in a large-scale network. By means of such a protocol, the execution time of the protocol can be significantly reduced, and the operating efficiency of the protocol can be improved. According to the above-generated views V = (V₁, . . . , V_{N} ), the prover computes the commitment values thereof: ${com}_{1} = {H}_{com} \left({V}_{1}\right) , … , {com}_{N} = {H}_{com} \left({V}_{N}\right) ,$ Further, the prover calls a hash function to compute a challenge value: ${I = H}_{c} \left({com}_{1},{com}_{2},…,{com}_{N}\right) .$ According to the obtained challenge value I, the prover opens the corresponding commitment values as the proof: $π = {\left\{{V}_{i}\right\}}_{i ∈ I .}$ Further, the general non-interactive zero-knowledge proof method of the present invention provides a verification algorithm. According to the proof π and a corresponding public input, the verifier sequentially runs the following verification algorithm:
4.1) According to the opened [fⱼ](i) and [Tfⱼ](i), the verifier recomputes [rᵢ] and [Trᵢ], where i∈ {1, . . . , k}, and then reconstructs the k packed secret-sharing values to obtain rᵢ and Trᵢ , where i∈ {1, . . . , k}. Further, the verifier verifies whether they satisfy the relation: T(rᵢ) = Trᵢ . If yes, the verifier continues subsequent verification; otherwise, the verification algorithm is terminated.

4.2) The verifier verifies correctness of execution of multiplication gates. According to the opened secret values wi in the proof π, the verifier recomputes [uᵢ]_{2d}. In combination with [uᵢ]_{2d} of unopened users in the proof for reconstruction, the verifier verifies whether the N values belong to the same secret-sharing polynomial and whether the reconstructed packed secret values are all 0. If yes, the verifier continues subsequent verification; otherwise, the verification algorithm is terminated.

4.3) The verifier verifies whether all commitment values are correctly opened. According to the opened Vi , where i ∈ I, the verifier recomputes ${com}_{i} = {H}_{com} \left({V}_{i}\right) , i ∈ I .$ In combination with comi in the proof, where i∈[N]\I, wherein "\" denotes the remaining elements after excluding subset I from set [N], the verifier recomputes ${H}_{c} \left({com}_{1},{com}_{2},…,{com}_{N}\right)$ and determines whether the result is equal to I. If yes, the verifier continues subsequent verification; otherwise, the verification algorithm is terminated.

4.4) Finally, according to the opened secret values and Vᵢ , where i∈I, the verifier recomputes the operation result of circuit C and determines whether the result is equal to 1. If yes, the verifier outputs that verification succeeds; otherwise, the verification algorithm is terminated.

The present invention further provides a general non-interactive zero-knowledge proof system based on packed secret sharing, comprising:
a precomputation module configured to run a preprocessing algorithm, wherein the prover and the verifier interact to generate verifiable random linear transformation pairs required in the proof phase;
a proof module configured to run a proving algorithm, wherein the prover performs packed secret sharing on the witness w, runs an arithmetic circuit C(x,w) according to packed secret-sharing values, a statement x, and the random linear transformation pairs generated in the precomputation phase, computes a proof π, and sends the proof π to the verifier; and
a verification module configured to run a verification algorithm, wherein the verifier verifies correctness of execution of the arithmetic circuit C(x,w) according to the proof π and a corresponding public input.

The advantages of the present invention are as follows:
The zero-knowledge proof system of the present invention is efficient. Compared with similar non-interactive zero-knowledge proofs based on multi-party computation, the present invention only needs to execute the circuit corresponding to the problem to be proved once, and the amortized proof size of each gate is O(1). The present invention can support proofs for large-scale circuit batch processing, can resist attacks from quantum computers, and meanwhile the framework of the present invention does not depend on any algebraic structure. Further, the present invention is the first postquantum zero-knowledge proof protocol capable of proving large-scale lattice problems and being implemented within seconds.

The present invention only needs to execute the underlying MPC protocol once, and the protocol can resist attacks from quantum computers and does not depend on any algebraic structure. Meanwhile, the protocol design scheme of the present invention is efficient and implementable. For key knowledge proof of the lattice-based key encapsulation mechanism Kyber512, the proof time is only 1.08 seconds, the preprocessing time is 1.3 seconds, and the verification time is 1.16 seconds.

### Brief description of the drawings

Fig. 1 is a flow chart of the three phases of the post-quantum non-interactive zero-knowledge proof method based on multi-party computation and packed secret sharing.
Fig. 2 is a schematic diagram showing module composition of the post-quantum noninteractive zero-knowledge proof system based on multi-party computation and packed secret sharing.

### Detailed description of the invention

The present invention is further described in detail below in conjunction with the accompanying drawings. The embodiments set forth below are merely used to explain the present invention, and are not intended to limit the scope of the present invention.

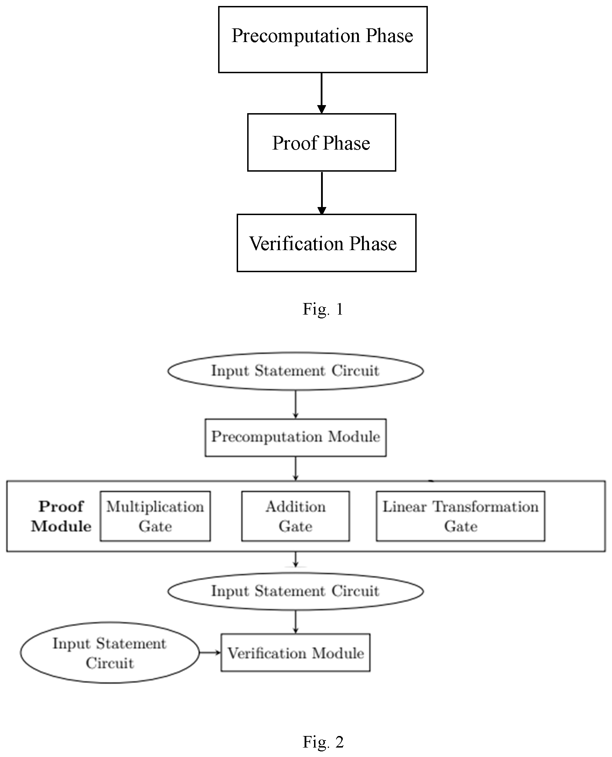

The present invention does not depend on any algebraic structure, and may be constructed based on any group, ring, and corresponding algebraic assumptions thereof. The present invention is described below by taking elements selected from F_{q} as an example. The method used in the present invention for generating verifiable random linear transformation pairs covers any protocol for generating required verifiable random linear transformation pairs by any method, wherein a verifiable random linear transformation pair with respect to linear transformation T is an ordered pair a, b satisfying T · a = b. The method of the present invention is described below with reference to Fig. 1 only by taking a "Cut-and-Choose" method for generating corresponding verifiable random linear transformation pairs as an example.

### I. Precomputation phase: preprocessing algorithm

(1)The preprocessing algorithm of the zero-knowledge proof is run by two participants, namely, a prover P and a verifier V . Finally, the prover generates verifiable random linear transformation pairs with respect to linear transformation T required in the proof phase. A specific protocol flow is as follows:
   The prover first randomly selects k+v+1 random vectors fⱼ of length 1, where j∈ {0, 1, ... , k+ v}. Then, for each fⱼ , the prover generates a packed secret sharing of degree d, denoted by [fⱼ], wherein the i-th share value is denoted by [fⱼ](i). Further, the prover computes Tfⱼ , and then, for each Tfⱼ , generates a packed secret sharing of degree d, denoted by [Tfⱼ]. Thereafter, the prover computes commitment values: ${Com}_{i} = {H}_{com} {\left(\left[{f}_{j}\right], \left[{Tf}_{j}\right]\right)}_{j ∈ \left[0,k+v\right]} .$ Further, the prover computes k+v random challenge values ${α}_{1} , … , {α}_{k + v} ← {H}_{C} \left({Com}_{1},…,{Com}_{N}\right) .$ For each group of secret-sharing values [fⱼ] and [Tfⱼ], where j ∈ {0, ... , k+v}, the prover computes: $\left[{r}_{i}\right] = \left[{f}_{0}\right] + \left[{f}_{1}\right] {α}_{i} + \left[f2\right] {{α}_{i}}^{2} + ⋯ + \left[{f}_{k + v}\right] {{α}_{i}}^{k + v}$ and $\left[{Tr}_{i}\right] = \left[{Tf}_{0}\right] + \left[{Tf}_{1}\right] {α}_{i} + \left[{Tf}_{2}\right] {{α}_{i}}^{2} + ⋯ + \left[{Tf}_{k + v}\right] {{α}_{i}}^{k + v} ,$ for all i ∈ {1,...,k + v}.
(2)The prover then sends ([rᵢ], [Trᵢ]), where i ∈ {1, ... , k}, to the verifier. According to the received linear transformation pairs ([rᵢ], [Trᵢ]), the verifier reconstructs the k packed secret-sharing values to obtain rᵢ and Trᵢ. Further, the verifier verifies whether they satisfy the linear transformation relation: $T \left({r}_{i}\right) = {Tr}_{i} .$ If verification succeeds, the verifier believes that the prover has honestly generated [fⱼ] and [Tfⱼ]. Then, the prover uses the remaining v groups of linear transformation pairs ([rᵢ], [Trᵢ]), which are not sent to the verifier in the precomputation phase, as secret-sharing values for executing subsequent linear-gate operations.

### II. Proof phase: proving algorithm

For any NP language class R(x, w) = 1, the corresponding arithmetic circuit is C(x, w) = 1, and the number of linear transformation gates with respect to linear transformation T is v, wherein v is a positive integer. The prover possesses the witness w, the statement x of the NP problem, and the v unopened linear transformation pairs generated in the precomputation phase, while the verifier only possesses the statement x of the NP problem.

The prover runs the proving algorithm according to the witness w and the unopened v linear transformation pairs ([rᵢ], [Trᵢ]), where i∈{k+1, . . . , k+v}:
(1) The prover first performs a packed secret-sharing algorithm of degree d on the witness w to compute [w]_{d} ← PSS(w), wherein the function P SS denotes a packed secret-sharing function whose input is a group of secret values of length l to be shared, and whose output is N secretsharing values corresponding to the group of secrets. For the packed secret-sharing function P SS, assume that the threshold value is t, the number of secrets to be shared is l, and the degree d satisfies: $d = t + 1 + 1 .$ The function first selects a polynomial F(x) of degree d satisfying: $F \left(-i\right) = {w}_{i} , i ∈ \left\{1,…,1\right\} ,$ and then randomly selects t + 1 points qᵢ satisfying: $F \left(i\right) = {q}_{i} , i ∈ \left\{0,…,t\right\} .$ According to the interpolation polynomial F(x), the secret-sharing values are computed as: $P SS \left(w\right) = {\left[w\right]}_{d} = \left(F\left(1\right),F\left(2\right),…,F\left(N\right)\right) .$
(2) The prover computes the arithmetic circuit C(x, w) = 1 corresponding to NP language R(x, w) = 1 according to the packed secret-sharing values [w]_{d} of the witness:
   a) Addition gate Add([e], [f]): For any two elements e, f∈F_{q} in the packed secret-sharing circuit on which an addition-gate operation is to be performed, the prover computes the addition gate as [d] = [e] + [f], wherein F_{q} is the set of elements selected from 0, 1, . . . , q-1. Finally, the output of the addition gate is [d].
   b) Linear transformation gate Multi([gᵢ], T, [rᵢ], [Trᵢ]): For the packed secret-sharing value [gᵢ] requiring linear transformation at the i-th linear transformation gate of the circuit and the corresponding linear transformation matrix T , the prover utilizes the i-th linear transformation pair ([rᵢ], [Trᵢ]) generated in the precomputation phase. The prover first computes [gᵢ] + [rᵢ], and then reconstructs to obtain gᵢ+rᵢ. The prover computes T(gᵢ+rᵢ) according to the matrix T requiring linear transformation, and then performs secret sharing again to obtain [T(gᵢ+rᵢ)]. According to [T(gᵢ+rᵢ)] and another element [Trᵢ] of the linear transformation pair, the prover calls the addition gate to compute: [T(gᵢ+rᵢ)] - [Trᵢ] = [Tgᵢ]. Finally, the prover outputs the packed secret-sharing value [Tgᵢ] after linear transformation.
   c) Multiplication gate Multi([gᵢ], [hᵢ]): For multiplication-gate computation required by the circuit, namely computing [gᵢ ∗ hᵢ] according to gᵢ and hᵢ , since the secret-sharing values are of degree d, the present invention first computes:
   ${\left[{z}_{i}\right]}_{2 d} = \left[{g}_{i}\right] \times \left[{h}_{i}\right] .$ At this time, [zᵢ]_{2d} is a secret-sharing value of degree 2d. The prover then reconstructs to obtain zi . Further, the prover again performs the packed secret-sharing algorithm to compute the secret-sharing value [zᵢ]_{d} of degree d corresponding to zᵢ . Then the prover computes: ${\left[{u}_{i}\right]}_{2 d} = {\left[{z}_{i}\right]}_{d} - {\left[{z}_{i}\right]}_{2 d} .$ It follows that the secret-sharing values corresponding to [uᵢ]_{2d} are all 0. Finally, the prover outputs the multiplication-gate result [zᵢ]_{d} and the corresponding verification value [uᵢ]_{2d}.
(3) The prover runs an output gate, wherein the output gate comprises N views of secret-sharing values: $V = \left({V}_{1},…,{V}_{N}\right) .$ Each Vᵢ comprises messages generated by running each packed secret-sharing operation gate, namely: ${V}_{i} = \left({\left[w\right]}_{d}\left(i\right),\left[{g}_{i}\right]\left(i\right)+\left[{r}_{i}\right]\left(i\right),{\left[{z}_{i}\right]}_{d},{\left[{u}_{i}\right]}_{2 d},\left[{f}_{j}\right]\left(i\right),\left[{Tf}_{j}\right]\left(i\right)\right) .$ Then the prover computes the corresponding commitment values ${com}_{1} = {H}_{com} \left({V}_{1}\right) , … , {com}_{N} = Hcom \left({V}_{N}\right) ,$ and sends the same to the verifier.
(4) According to the received commitment values com₁, com₂, . . . , com_{N} , the verifier randomly selects a challenge set I satisfying |I| = t, and sends the challenge set to the prover.
(5) According to the received challenge set, the prover opens the corresponding commitment values and sends the same to the verifier. Namely, the prover sends Vᵢ , where i∈I, as the proof to the verifier.
(6) Further, according to the general Fiat-Shamir transform, the present invention can convert the above general interactive zero-knowledge proof protocol into a non-interactive zero-knowledge proof protocol. The prover computes the commitment values according to the above-generated views V = (V₁, . . . , V_{N}): ${com}_{1} = {H}_{com} \left({V}_{1}\right) , … , {com}_{N} = {H}_{com} \left({V}_{N}\right) .$ Further, the prover calls a hash function to compute the challenge value:
   I = H_{c}(com₁, com₂, . . . , com_{N}). According to the obtained challenge value I, the prover opens the corresponding commitment values as the proof: π = {Vᵢ}_{i∈I}.

### III. Verification phase: verification algorithm

(1) According to the opened [fⱼ](i) and [Tfⱼ](i), the verifier recomputes [rᵢ] and [Trᵢ ], where i∈{1, . . . , k}, and then reconstructs the k packed secret-sharing values to obtain rᵢ and Trᵢ. Further, the verifier verifies whether the following relation is satisfied: T(ri) =Trᵢ.
(2) The verifier verifies correctness of execution of multiplication gates. According to the secret values wi opened in the proof π, the verifier recomputes [uᵢ]_{2d}. In combination with [uᵢ]_{2d} of unopened users in the proof for reconstruction, the verifier verifies whether the N values belong to the same secret-sharing polynomial and whether the reconstructed packed secret values are all 0.
(3) The verifier verifies whether all commitment values are correctly opened. According to the opened Vᵢ, where i∈I, the verifier recomputes ${com}_{i} = {H}_{com} \left({V}_{i}\right) , i ∈ I .$ In combination with comi in the proof, where i∈[N]\I, the verifier recomputes ${H}_{c} \left({com}_{1},{com}_{2},…,{com}_{N}\right)$ and determines whether the result is equal to I.
(4) Finally, according to the opened secret values and Vᵢ , where i∈I, the verifier recomputes the running result of circuit C and determines whether the result is equal to 1.

The present invention does not depend on any algebraic structure, and the general noninteractive zero-knowledge proof method and system of the present invention may be constructed based on any group, ring, and corresponding algebraic assumptions thereof. The above embodiments merely describe the method and system of the present invention by taking the field F_{q} as an example.

The present invention covers technical solutions of any zero-knowledge proof protocol framework, for example, a verification circuit in which the prover runs an MPC protocol based on a packed secret-sharing scheme under the MPCitH framework.

In the precomputation phase, the linear transformation pair generation protocol used in the present invention covers any protocol that generates required linear transformation pairs by any method. The description of the present invention merely takes a "Cut-and-Choose" method for generating corresponding linear transformation pairs as an example to introduce the method of the present invention.

### Experimental Results:

The present invention develops an experiment for the algorithm module. The algorithm module is implemented in C++17. Polynomial and vector operations in the protocol are implemented using NTL 11.5.12 and GNU Multiple Precision Arithmetic Library 6.2.13, and SHA256 and SHAKE256 algorithms in the OpenSSL library are selected as a random oracle model. Performance benchmarks are conducted on a 14-inch Apple MacBook Pro laptop powered by Apple Silicon M1 Pro (3.2 GHz), with 10 CPU cores and 16 GB memory.

Experiment 1: Kyber512 Let (k, v) = (70, 4). For Kyber512 and the NIZKAoK system of the present invention, the module rank is selected as k = 2, and η = 2, q = 3329, and (N, t, l) = (1454, 150, 256). The proof time of the method is only 1.08 seconds, the preprocessing time is 1.3 seconds, and the verification time is 1.16 seconds. Specifically, the time required for proving linear relations is 0.2 s, and the time required for proving secret-vector ranges is 0.88 s.

Experiment 2: Frodo640 Let (k, v) = (90, 8). For Frodo640 and the NIZKAoK system of the present invention, parameters are selected as n = 640, n¯ = 8, q = 215, and (N, t, l) = (2500, 250, 640). The proof time of the method is 12.81 s, wherein the preprocessing time is 6.5 s, and the verification time is 7.3 s. Specifically, the time required for proving linear relations is 0.2 s, and the time required for proving secret-vector ranges is 12.61 s.

Another embodiment of the present invention provides a general non-interactive zeroknowledge proof system based on packed secret sharing, as shown in Fig. 2, comprising:
a precomputation module configured to run a preprocessing algorithm, wherein the prover and the verifier interact to generate verifiable random linear transformation pairs required in the proof phase;
a proof module configured to run a proving algorithm, wherein the prover performs packed secret sharing on the witness w, runs an arithmetic circuit C(x, w) according to packed secret-sharing values, the statement x, and the random linear transformation pairs generated in the precomputation phase, and computes a proof π to be sent to the verifier, wherein the arithmetic circuit comprises a multiplication-gate module, an addition-gate module, and a linear transformation-gate module; and
a verification module configured to run a verification algorithm, wherein the verifier verifies the correctness of execution of the arithmetic circuit C(x, w) according to the proof π and a corresponding public input.

For specific implementation processes of the modules, reference may be made to the foregoing description of the method of the present invention. Another embodiment of the present invention provides a computing device, including a memory and a processor, wherein the memory stores a computer program, the computer program is configured to be executed by the processor, and the computer program comprises instructions for executing the steps of the method of the present invention. Another embodiment of the present invention provides a computer-readable storage medium, such as ROM/RAM, a magnetic disk, or an optical disk, wherein the computer-readable storage medium stores a computer program, and when the computer program is executed by a computer, each step of the method of the present invention is implemented. Although specific embodiments of the present invention are disclosed for purposes of illustration, so as to facilitate understanding of the contents of the present invention and implementation thereof, those skilled in the art can understand that various substitutions, changes, and modifications are possible without departing from the spirit and scope of the present invention and the appended claims. Therefore, the present invention should not be limited to the contents disclosed in the preferred embodiments, and the scope of protection of the present invention shall be subject to the scope defined by the claims.

## Claims

1. A packed secret sharing-based general non-interactive zero-knowledge proof method, comprising a precomputation phase, a proof phase, and a verification phase, wherein.
running a preprocessing algorithm in the precomputation phase by a prover and a verifier to generate verifiable random linear transformation pairs required in the proof phase;.
running a proving algorithm in the proof phase by the prover, performing packed secret sharing on a witness w, running an arithmetic circuit C(x, w) according to packed secret-sharing values, a statement x, and the random linear transformation pairs generated in the precomputation phase, computing a proof π, and sending the proof π to the verifier;
running a verification algorithm in the verification phase by the verifier according to the proof π and a corresponding public input, verifying the correctness of execution of the arithmetic circuit C(x, w).

2. The method according to claim 1, wherein the preprocessing algorithm comprises
randomly selecting k+v+1 random vectors fⱼ of length l by the prover, where j∈{0, 1, . . . , k+v} , k is a parameter indicating the number of challenge values for ensuring algorithm security, and v is the number of linear transformation gates required in a subsequent proof circuit; generating a packed secret sharing of degree d [fⱼ], wherein the i-th packed secret-sharing value is denoted by [fⱼ](i), computing Tfⱼ, wherein T is a matrix representing a linear transformation required in the proving process, generating a packed secret sharing of degree d [Tfⱼ];
computing commitment values of the packed secret sharing Comᵢ= H_{com} (([fⱼ], [Tfⱼ])_{j∈[0,k+v]}) and k+v random challenge values α₁, . . . , αₖ₊ᵥ ← H_{C}(Com₁, . . . , Com_{N}) by the prover, wherein H_{com} is a hash function, H_{C} is a hash function, N denotes the output length of the secret sharing,
computing [rᵢ ] = [f₀] + [f₁]αᵢ + [f2]αᵢ² + · · · + [fₖ₊ᵥ]αᵢ^{k+v} and [Tfⱼ ] and [Trᵢ ] = [Tf₀] + [Tf₁]αᵢ + [Tf₂] αᵢ² + · · · + [Tfₖ₊ᵥ] αᵢ^{k+v} by the prover for each group of secretsharing values [fⱼ], [Tfⱼ])_{j∈[0,k+v]}, sending the linear transformation pairs ([rᵢ], [Trᵢ]), where i∈{1, . . . , k}, to the verifier; verifying by the verifier whether [fⱼ] and [Tfⱼ] satisfy the linear transformation relation T, if verification succeeds, the verifier believes that the prover has honestly generated [fⱼ] and [Tfⱼ];. using the remaining v groups of unopened linear transformation pairs ([rᵢ], [Trᵢ]), where i∈{k+1, . . . , k+v}, as secret-sharing values for executing subsequent linear-gate operations.

3. The method according to claim 2, wherein the proving algorithm comprises
performing a packed secret-sharing algorithm of degree d by the prover on the witness w to compute [w]_{d} ← PSS(w), wherein the function PSS denotes a packed secret-sharing function;
computing the arithmetic circuit C(x, w) = 1 corresponding to NP language R(x, w) = 1 by the prover according to the packed secret-sharing values [w]_{d} of the witness;
running an output gate by the prover, wherein the output gate comprises N views of secret-sharing values V = (V₁, . . . , V_{N} ), each Vᵢ comprises messages generated by running each packed secret-sharing operation gate; computing the corresponding commitment values com₁ = H_{com}(V₁), . . . , com_{N} = Hcom(V_{N}) by the prover and sending the same to the verifier;
randomly selecting a challenge set I by the versifier according to the received commitment values com₁, com₂, . . . , com_{N} and sending the challenge set to the prover;
opening the corresponding commitment values by the prover according to the received challenge set and sends the same to the verifier; namely, sending Vᵢ , where i∈I, as the proof to the verifier;
converting the general interactive zero-knowledge proof protocol according to general Fiat-Shamir transform into a non-interactive zero-knowledge proof protocol which comprises: computing the commitment values com₁ = H_{com}(V₁), . . . , com_{N} = H_{com}(V_{N}) by the prover according to the above-generated views V = (V₁, . . . , V_{N}), computing the challenge value I = Hc(com1, com2, . . . , comN) by calling a hash function, opening the corresponding commitment values as the proof: π = {Vi}i∈I.

4. The method according to claim 3, wherein the arithmetic circuit comprises:
addition gate Add([e], [f]): for any two elements e,f∈F_{q} in the circuit on which an addition-gate operation is to be performed, computes the addition gate by the prover as [d] = [e] + [f], wherein F_{q} is a set of elements selected from 0, 1, . . . , q-1, and q represents the modulus of an underlying computation field F, the output of the addition gate is [d];
linear transformation gate Multi([gᵢ], T, [rᵢ], [Trᵢ]): for the packed secret-sharing value [gᵢ] requiring linear transformation and the corresponding linear transformation matrix T , utilizes the i-th linear transformation pair ([rᵢ], [Trᵢ]) generated in the precomputation phase by the prover to compute [gᵢ]+[rᵢ] first, reconstructs [gᵢ]+[rᵢ] according to a packed secret-sharing reconstruction algorithm and computes T(gᵢ+rᵢ) to obtain [T(gᵢ+rᵢ)] according to the matrix T and performs secret sharing again, calls the addition gate to compute [T(gᵢ+rᵢ)] - [Trᵢ] = [Tgᵢ] according to [T(gᵢ+rᵢ)] and another element [Trᵢ] of the linear transformation pair, outputs the packed secret-sharing value [Tgᵢ] ;
multiplication gate Multi([gᵢ], [hᵢ]): for multiplication-gate computation of the circuit, namely, computing [gᵢ∗hᵢ] according to gᵢ and hᵢ , computes [zᵢ]_{2d} = [gᵢ] × [hi] first, at this time, [zi]_{2d} is a secret-sharing value of degree 2d, reconstructs [zᵢ]_{2d} to obtain zᵢ, performs the packed secret-sharing algorithm again to compute a secret-sharing value [zᵢ]_{d} of degree d corresponding to zᵢ, computes [uᵢ]_{2d} = [zᵢ]_{d} - [zᵢ]_{2d}, herein the secret-sharing values corresponding to [uᵢ]_{2d} are all 0, outputs the result [zᵢ]_{d} of the multiplication gate and the corresponding verification value [uᵢ]_{2d}.

5. The method according to claim 4, wherein the verification algorithm comprises:
recomputing [rᵢ] and [Trᵢ] by the verifier according to the opened [fⱼ](i) and [Tfⱼ](i); reconstructing the k packed secret-sharing values to obtain rᵢ and Trᵢ , where i∈{1, . . . , k}; verifying whether they satisfy the relation T(rᵢ) = Trᵢ, if yes, continuing subsequent verification, otherwise, ternimating the algorithm;
verifying correctness of execution of multiplication gates by the verifier: recomputing [uᵢ]_{2d} according to the opened secret values wi in the proof π; combinating [uᵢ]_{2d} of unopened users in the proof for reconstruction; verifying whether the N values belong to the same secret-sharing polynomial and whether the reconstructed packed secret values are all 0, if yes, continuing subsequent verification, otherwise, terminating the verification algorithm;
verifying whether all commitment values are correctly opened by the verifier: recomputing comᵢ = H_{com}(Vᵢ), i∈I, according to the opened Vᵢ ; recomputing H_{c}(com₁, com₂, . . . , com_{N}) in combination with comi in the proof, where i∈[N]\I; determing whether the result is equal to I, if yes, continuing subsequent verification; otherwise, terminating the verification algorithm;
recomputing the operation result of circuit C by the verifier according to the opened secret values and Vᵢ , where i∈I; determing whether the result is equal to 1, if yes, outputing that verification succeeds, otherwise, terminating the verification algorithm.

6. A packed secret sharing-based general non-interactive zero-knowledge proof system, comprising
a precomputation module configured to run a preprocessing algorithm, wherein the prover and the verifier interact to generate verifiable random linear transformation pairs required in the proof phase;
a proof module configured to run a proving algorithm, wherein the prover performs packed secret sharing on the witness w, runs an arithmetic circuit C(x,w) according to packed secret-sharing values, a statement x, and the random linear transformation pairs generated in the precomputation phase, computes a proof π, and sends the proof π to the verifier; and
a verification module configured to run a verification algorithm, wherein the verifier verifies correctness of execution of the arithmetic circuit C(x,w) according to the proof π and a corresponding public input.

7. A computer device, comprising a memory and a processor, wherein the memory stores a computer program configured to be executed by the processor, and the computer program comprises instructions for performing the method according to any one of claims 1 to 5.

8. A computer-readable storage medium, storing a computer program which, when executed by a computer, implements the method according to any one of claims 1 to 5.
